# FASCICULE DE BREVET EUROPEEN

(11) **EP 1 307 109 B1**
(45) Date de publication et mention de la délivrance du brevet: **22.10.2014**
(21) Numéro de dépôt: 01958192.5
(22) Date de dépôt: 27.07.2001
(51) Int. Cl.: A23G 9/04, A23G 9/34, A23G 9/38, A23G 9/48

(54) **PROCEDE DE PREPARATION DE PRODUITS ALIMENTAIRES CONGELES COMPRENANT UNE PHASE AQUEUSE GELIFIEE**
VERFAHREN ZUR HERSTELLUNG VON GEFRORENEN NAHRUNGSMITTELN ENTHALTEND EINE GELARTIGE WÄSSRIGE PHASE
METHOD FOR PREPARING FROZEN FOOD PRODUCTS COMPRISING A GELLED AQUEOUS PHASE

(30) Priorité: 27.07.2000 FR 0009848
(43) Date de publication de la demande: 07.05.2003
(73) Titulaire: MARS, INCORPORATED, McLean, Virginia 22101-3883 (US)
(72) Inventeur: ZUGMEYER, Philippe, F-67700 Saverne (FR); HOVORKA, Martin, F-15200 Prague 52 (CZ); ROUSSEL, Sonia, F-67000 Strasbourg (FR); BACCUS, Marc, F-54540 Migneville (FR)
(74) Mandataire: Hirsch & Associés
(86) Numéro de dépôt international: PCT/FR2001/002473
(87) Numéro de publication internationale: WO 2002/009531

(56) Documents cités:
- EP-A- 0 396 214
- EP-A- 0 441 495
- WO-A-94/02027
- WO-A-98/34499
- US-A- 4 229 484
- US-A- 4 500 553
- US-A- 4 554 169
- US-A- 4 725 445
- US-A- 5 084 295
- US-A- 5 527 556
- US-A- 5 656 317
- US-A- 5 939 126
- US-A- 6 010 734

## Description

La demande décrit des produits alimentaires congelés, notamment des glaces alimentaires ayant une texture molle et élastique (« chewy ») à la température de congélation des produits alimentaires (-5 à-30°C).

L'invention concerne un procédé de préparation de tels produits alimentaires.

On connaît différents types de confiserie gélatineuse qui incorporent un composé de type gélatine parfois avec un autre composant tel que la crème, de la confiture, etc. L'aspect mou, résistant à la mastication, constitue une des caractéristiques essentielles du produit, et est apprécié par le consommateur.

Il est connu de US-A-4,500,553 un procédé de fabrication de friandise à texture double dans lequel une composition fruitée est introduite dans une composition aérée partiellement gelée comprenant de la crème et de la gélatine. EP-A-0 441 495 divulgue un procédé pour fabriquer des émulsions contenant une phase grasse et une phase aqueuse destinées à être utilisées comme substitut de graisse à faible calorie dans lequel on mélange la phase grasse dans une composition obtenue par mélange d'un composé gélifiant avec une solution aqueuse. US-A-6,010,734 (continuation de la demande parente US-A-5,084,295) décrit un dessert glacé basse calorie fabriqué en réalisant une pré-émulsion qui est ensuite mélangée avec d'autres ingrédients, notamment de l'eau et éventuellement un gélifiant. WO-A-98/34499 décrit un aliment obtenu par mélange d'une phase grasse et d'une phase aqueuse gélifiée. US-A-5,9 9,126 décrit un dessert du type mousse obtenu par l'introduction d'un mélange chaud d'eau et de gélatine dans un autre mélange froid. EP-A-0 396 214 décrit un sirop pour réaliser une boisson basse-calorie avec une consistance semi-glacée.

Depuis longtemps, on cherche à développer des produits congelés ayant une texture gélifiée conférant à ces produits congelés une texture molle, élastique à la température de congélation des produits alimentaires (-5 à-30°C). Toutefois, les méthodes actuelles de préparation ainsi que les préparations susceptibles d'être obtenues par de telles méthodes présentent des imperfections. Les produits congelés ainsi obtenus présentent des phases gélifiées instables ou qui ne sont pas homogènes ; ils perdent en outre leur élasticité à basse température. Ces imperfections apparaissent en général au cours de la préparation car des composés gélifiants tels que la gélatine ou la pectine prennent en masse au contact d'un composé alimentaire gelé ou au contact de la surface d'un récipient refroidi.

Un but de l'invention est donc de fournir un procédé permettant de préparer des produits alimentaires congelés présentant une phase aqueuse, molle, gélifiée, stable et homogène. Selon un mode préféré de réalisation, le produit alimentaire est une glace alimentaire et plus particulièrement un sorbet, mais l'invention est également applicable aux crèmes glacées, aux yaourts glacés, aux crèmes anglaises glacées, aux glaces à l'eau, aux confiseries chocolatées glacées et notamment aux barres et bâtonnets chocolatés glacés.

En vue de la réalisation de l'invention, on prévoit selon l'invention un procédé de préparation en ligne de produits alimentaires congelés comprenant une phase aqueuse gélifiée, qui comprend différentes étapes. Un tel procédé comprend les étapes de :
A)-Préparation d'une composition A, qui comprend les sous-étapes de :
   1)-mélange des ingrédients, dans une phase aqueuse, à l'exception du ou des composés gélifiants ;
   2)-facultativement, de pasteurisation du mélange obtenu en 1) ;
   3)-maintien en température du mélange obtenu en 1) ou 2) à une température comprise entre -5°C et +15°C, de préférence à + 2°C ;
B)-Préparation d'une composition B, obtenue en mélangeant du ou des composés gélifiants avec une solution aqueuse contenant facultativement une partie des ingrédients à une température comprise entre +40°C et + 100 °C, de préférence entre + 60°C et +90°C;
C)-Mélange desdites compositions A et B à une température comprise entre + 5°C et + 20°C, de préférence entre + 10°C et + 15°C en utilisant un mélangeur dynamique à haut pouvoir de cisaillement dont la vitesse de rotation est comprise entre 1500 et 3000 tr/min;
D)-Facultativement mise en contact dudit produit alimentaire obtenu à l'étape C) avec un second produit alimentaire glacé ; et
E)-Congélation dudit produit alimentaire.

La préparation A comprend au moins un des ingrédients choisi dans le groupe des agents sucrants, des agents aromatisants, des exhausteurs de gout, des agents stabilisants, des agents conservateurs, des colorants, des concentrés de fruits naturels ou artificiels. Les différents ingrédients présents dans la préparation A sont déterminés par l'homme de l'art en fonction des qualités gustatives, énergétiques, ainsi que de l'apparence que l'on souhaite conférer au produit.

Les agents sucrants peuvent être d'origine naturelle ou artificielle, et peuvent être par exemple du sucre en poudre (sucrose), du sucre liquide, du sirop de glucose, du fructose, de l'aspartam. L'agent sucrant peut être utilisé dans une proportion de 15 à 60% en poids de la préparation A, de préférence 20 à 40%. Cette proportion peut être réduite lorsque l'agent sucrant est d'origine artificielle. Dans ce cas, il est intéressant d'avoir un agent de remplissage tel que par exemple la maltodextrine, le polydextrose pour obtenir la texture désirée.

Une variété d'agents aromatisants naturels ou artificiels peut également être utilisée pour entrer dans la composition de la préparation A. Ainsi, par exemple et de manière non limitative, des extraits de fraise, d'orange, de framboise, de vanille, de cacao peuvent être utilisés selon les préférences. La quantité d'agent aromatisant est variable et dépend des qualités gustatives recherchées. En général, l'agent aromatisant est présent dans une proportion allant de 0,01 à 10% en poids de la préparation A, de préférence il est compris entre 0,50 et 1,5%.

Parmi les stabilisateurs utilisés, il convient de citer la pectine, la cellulose, la méthylcellulose. Plus particulièrement, le stabilisateur peut être de la gomme, telle que la guar, la caroube, la gomme de xanthane, la gomme d'acacia. Ces stabilisateurs présentent en outre des propriétés gélifiantes et pourront à ce titre être introduite dans la préparation B suivante.

Parmi les colorants susceptibles d'être utilisés, il convient de citer notamment le sureau et le bêta-carotène.

Parmi les agents conservateurs susceptibles d'être utilisés pour la préparation du produit alimentaire, il convient de citer le glycérol et ses dérivés. Cet agent présente un intérêt supplémentaire lié à sa capacité à fixer les molécules d'eau. En effet, cette propriété du glycérol permet d'augmenter la transparence du centre gélatineux gelé lorsque le glycérol est ajouté dans la phase aqueuse au cours de la préparation du centre gélatineux jusqu'à une concentration de 5% (au delà le glycérol confère un goût désagréable eu produit).

Le procédé comprend une seconde étape de préparation d'une composition B, obtenue en mélangeant du ou des composés gélifiants avec une solution aqueuse contenant facultativement une partie des ingrédients à une température comprise entre + 40°C et + 100°C, de préférence entre + 60°C et + 90°C. Cette seconde étape est réalisée sous agitation. La composition B est facultativement conservée dans un réservoir sous agitation à une température comprise entre + 40°C et +100°C, de préférence entre + 60°C et + 90°C. En outre, le maintien en température a l'intérêt de réaliser une pasteurisation par batch de la composition B.

La troisième étape du procédé correspond au mélange desdites compositions A et B à une température comprise entre + 5°C à + 20°C, de préférence entre +10°C et +15°C ; ce mélange se fait de préférence en continu. Il est de type dynamique et est réalisé au moyen d'un mélangeur dynamique. La taille du rotor, le nombre d'hélices, la forme des pales, ainsi que la vitesse de rotation du rotor sont adaptés par l'homme du métier en fonction du volume de la production mais également en fonction de la texture, de la viscosité et plus généralement de la composition du mélange des compositions A et B. Le mélangeur dynamique utilisé est un mélangeur dynamique à haut pouvoir de cisaillement dont la vitesse de rotation est comprise entre 1500 et 3000 tr/min..

De manière préférée, le procédé selon l'invention comprend une étape additionnelle D de mise en contact dudit produit alimentaire obtenu à la troisième étape avec un second produit alimentaire glacé. Dans le cadre de la préparation de glace alimentaire et notamment de sorbet, ce second produit alimentaire correspond à une coque (« shell ») glacée comestible. Le produit alimentaire obtenu à la troisième étape correspond au centre gélifié du sorbet ; il présente une texture gélifiée, c'est-à-dire molle, élastique (« chewy »), stable et homogène. De préférence, le centre gélifié a une apparence translucide.

Enfin, la dernière étape E du procédé correspond à la congélation dudit produit alimentaire obtenu à la troisième ou à la quatrième étape. Cette congélation est réalisée à une température inférieure à 0°C; de manière préférée comprise entre -20°C et -30°C.

Selon un mode préféré de réalisation du procédé selon l'invention, ledit composé gélifiant est choisi de préférence dans le groupe composé de la gélatine et de la pectine. De manière plus préférée, il s'agit de la gélatine ; celle-ci est présente dans le centre gélifié du produit alimentaire obtenu à la troisième étape du procédé dans une proportion allant de 0,1 à 10%, de manière préférée de 3 à 7% en poids du centre gélifié dudit produit alimentaire. La quantité d'agent gélifiant présent dans le produit alimentaire dépend du type de produit que l'on désire obtenir (c'est-à-dire la quantité de phase aqueuse, la consistance et la viscosité du produit recherché, l'influence d'autre composants sur la viscosité, la température de conservation et de consommation).

Le produit alimentaire obtenu à la troisième étape du procédé peut en outre comprendre de la pectine dans une proportion de 0,1 à 10%, de manière préférée de 3 à 7% en poids du coeur dudit produit alimentaire.

Cependant, d'autres composés gélifiants peuvent être utilisés, il convient de citer l'agar, le guar, la caroube, les alginates, la gomme de xanthane, la gomme d'acacia.

Le produit alimentaire obtenu à la troisième étape du procédé de l'invention à un taux d'humidité compris entre 30 et 70%, de préférence entre 40 et 60% en poids dudit produit alimentaire obtenu à la troisième étape. La phase aqueuse du produit alimentaire est introduite dans la composition sous la forme d'eau dans la préparation de sorbet et peut être également introduite sous la forme de lait. Dans le cadre de la préparation de crème glacée, le lait correspond soit à du lait naturel, soit à de la poudre de lait, de la poudre de lactosérum, du lactose, à des protéines de lait.

L'agent conservateur et l'agent exhausteur de goût sont de préférence l'acide citrique qui est présent dans ledit produit alimentaire obtenu à la troisième étape du procédé dans une proportion allant de 0,01% à 10%, de préférence de 1 à 3% en poids dudit produit alimentaire obtenu à la troisième étape.

Facultativement, le procédé selon l'invention comprend en outre une ou plusieurs étapes de préparation de la coque comestible.

La préparation de la coque comestible est obtenue en mélangeant différents ingrédients. La coque comprend au moins un ingrédient choisi dans le groupe de l'eau, des agents sucrants, des agents stabilisants, des colorants, des conservateurs, des exhausteurs de goût, les préparations de fruits. La coque peut en outre comprendre du lait ou du chocolat.

Le mélange de la coque est conservé dans un réservoir à + 2°C puis une dose de ce mélange est coulée dans un moule. Le mélange est ensuite congelé ; le centre du moule contenant le mélange est aspiré par succion pour ne laisser sur les côtés du moule qu'une fine pellicule de mélange gelé correspondant à la coque.

Cette coque est conservée congelée avant d'être mise en contact par remplissage avec le produit alimentaire obtenu en troisième étape du procédé de l'invention, c'est-à-dire le centre gélatineux.

Enfin, la présente demande décrit également le produit alimentaire congelé susceptible d'être obtenu par le procédé.

Le produit alimentaire susceptible d'être obtenu par le procédé de l'invention peut être n'importe quel produit lacté ou non lacté, par exemple une crème glacée, du lait glacé, de la crème anglaise glacée, du yaourt glacé, une mousse glacée, un sorbet, une glace à l'eau mais également des confiseries glacées, notamment les confiseries chocolatées glacées telles les barres ou bâtonnets chocolatés glacés. De préférence, le produit alimentaire obtenu par le procédé de l'invention est sélectionné dans le groupe composé des glaces alimentaires. Parmi, les glaces alimentaires il s'agit plus particulièrement d'un sorbet. Lorsqu'il s'agit de glace alimentaire, le procédé selon l'invention peut comporter en outre une étape d'insertion du bâtonnet dans ladite glace alimentaire et une étape additionnelle de démoulage. L'étape d'insertion du bâtonnet utilise la texture remarquable du centre gélifiée pour y insérer en ligne le bâtonnet ; du fait de la texture du centre gélatineux aux basses températures, le bâtonnet reste en position, sans tomber, ni s'enfoncer dans le sorbet.

Le produit alimentaire congelé susceptible d'être obtenu par le procédé se caractérise en ce qu'il possède une texture molle, élastique (« chewy ») à la température de congélation des produits alimentaires. Ce produit est en outre stable, homogène et continu.

Selon le mode préféré de réalisation de l'invention, le sorbet présente une coque comestible qui entoure le centre gélatineux obtenu à la troisième étape du procédé et qui possède une structure molle et élastique (« chewy »). De préférence, le centre gélatineux du sorbet a un aspect translucide.

Le procédé de préparation de la présente invention peut être aisément mis en place dans l'industrie alimentaire notamment dans l'industrie des produits alimentaires glacés. Sa mise en place peut directement s'insérer dans une ligne de production déjà existante. Ce procédé peut donc être mis en place pour un coût relativement réduit.

Les produits alimentaires susceptibles d'être obtenus par un tel procédé, et notamment les glaces, les sorbets, les barres chocolatées, ont une texture gélifiée et un aspect translucide apprécié du public. Ils présentent en outre un intérêt pratique évident puisque la texture gélifiée du produit alimentaire retarde la fonte du produit, qui peut ainsi être consommé sans que le produit ne coule sur les doigts du consommateur.

D'autres caractéristiques et avantages de l'invention apparaîtront encore dans la description qui va suivre d'un mode préféré de mise en oeuvre de l'invention donné à titre d'exemple non limitatif.

Selon un mode préféré, le procédé de l'invention est mis en oeuvre pour préparer un sorbet à bâtonnet. Selon un mode préféré de mise en oeuvre, la composition A de l'invention est obtenue en mélangeant dans de l'eau, du sucre liquide, du sirop de glucose, de l'acide citrique monohydrate, de l'arôme de fraise, de la pectine (faiblement concentrée en méthoxy) et un colorant rouge de type Sureau. Cette composition est pasteurisée puis mise à maintenue en température dans un réservoir à 2°C.

Parallèlement ou de manière décalée dans le temps, la composition B de l'invention est préparée. Elle correspond à la préparation d'un mélange aqueux de la gélatine et de la pectine. Celles-ci sont dissoutes dans de l'eau chauffée à une température de 60°C à 90°C sous agitation. La composition B est ensuite stockée dans un réservoir sous agitation à une température comprise entre 60°C et 90°C. Les compositions A et B sont ensuite mélangées avec un mélangeur dynamique à haut pouvoir de cisaillement. Le mélange obtenu constitue le centre gélatineux du sorbet. Sa composition est donnée dans le tableau I. La fréquence de rotation du rotor est comprise entre 1500 et 3000 tour/min. et la température du mélange A et B étant comprise entre 10°C et 15°C.

Parallèlement une coque comestible est préparée selon un procédé déjà décrit dans l'art antérieur. Les ingrédients nécessaires à la préparation de la coque comestible sont mentionnés dans le tableau I. Ces ingrédients sont mélangés dans une phase aqueuse. La coque comestible gelée, moulée est ensuite remplie en ligne avec le mélange des compositions A et B à une température comprise entre +10°C et +15°C. Le sorbet ainsi obtenu est stocké, congelé et un bâtonnet est inséré en ligne dans son centre gélatineux.

Le sorbet est démoulé, stocké et facultativement empaqueté.

**TABLEAU I**

| Composition | Total | Centre gélatineux | Coque |
|---|---|---|---|
| % en poids | 100 | 50 | 50 |
| Matériel brut | | | |
| eau (ajouté) | 49,06 | 37,54 | 60,57 |
| sucre liquide | 33,38 | 36,00 | 30,75 |
| sirop de glucose | 12,60 | 20,00 | 5,20 |
| gélatine | 1,50 | 3,00 | |
| concentré de fruit orange | 1,50 | - | 3,00 |
| acide citrique monohydrate | 1,25 | 2,50 | |
| arôme de fraise | 0,25 | 0,50 | |
| pectine (faiblement concentrée en méthoxy) | 0,22 | 0,43* | |
| stabilisateur de la coque | 0,18 | - | 0,35 |
| émulsion de béta-carotène | 0,05 | - | 0,10 |
| colorant rouge de type Sureau | 0,02 | 0,03 | |
| arôme orange | 0,02 | - | 0,03 |
| Matière solide totale | 36,50 | 45,80 | 27,30 |
| Humidité totale | 63,50 | 54,20 | 72,70 |

| | | | |
|---|---|---|---|
| * dans les 0,43% de la pectine (faiblement concentrée en méthoxy), il y a 0,03% de lactate de calcium. Les agents stabilisants de la coque contiennent de la caroube (E 410) est de la guar (E 412). | | | |

## Revendications

1. Procédé de préparation en ligne de produits alimentaires congelés comprenant une phase aqueuse gélifiée, qui comprend les étapes de :
A)-Préparation d'une composition A, qui comprend les sous-étapes de :
1)-mélange des ingrédients, dans une phase aqueuse, à l'exception du ou des composés gélifiants ;
2)-facultativement, de pasteurisation du mélange obtenu en 1) ;
3)-maintien en température du mélange obtenu en 1) ou 2) à une température comprise entre -5 °C et + 15 °C, de préférence à + 2 °C ;
B)-Préparation d'une composition B, obtenue en mélangeant du ou des composés gélifiants avec une solution aqueuse contenant facultativement une partie des ingrédients à une température comprise entre + 40 °C et + 100 °C, de préférence entre + 60 °C et + 90 °C;
C)-Mélange desdites compositions A et B à une température comprise entre + 5 °C et + 20 °C, de préférence entre + 10 °C et + 15 °C en utilisant un mélangeur dynamique à haut pouvoir de cisaillement dont la vitesse de rotation est comprise entre 1500 et 3000 tr/min;
D)-Facultativement mise en contact dudit produit alimentaire obtenu à l'étape C) avec un second produit alimentaire glacé ; et
E)-Congélation dudit produit alimentaire.

2. Procédé selon la revendication 1, dans lequel ledit composé gélifiant est choisi dans le groupe composé de la gélatine, de la pectine, de la guar, du caroube, des alginates.

3. Procédé selon les revendications 1 et 2, dans lequel ledit produit alimentaire obtenu à l'étape C) comprend de la gélatine dans une proportion allant de 0,1 à 10%, de manière préférée de 3 à 7% en poids dudit produit alimentaire obtenu à l'étape C).

4. Procédé selon les revendications 1 à 3, dans lequel ledit produit alimentaire obtenu à l'étape C) comprend en outre de la pectine dans une proportion allant de 0,1 à 10%, de manière préférée de 3 à 7% en poids dudit produit alimentaire obtenu à l'étape C).

5. Procédé selon l'une quelconque des revendications précédentes, dans lequel ledit produit alimentaire obtenu à l'étape C) a un taux d'humidité compris entre 30 et 70%, de préférence entre 40 et 60% en poids dudit produit alimentaire obtenu à l'étape C).

6. Procédé selon l'une quelconque des revendications précédentes, dans lequel ladite préparation A comprend au moins un des ingrédients choisi dans le groupe des agents sucrants, des agents aromatisants, des exhausteurs de goût, des agents stabilisants, des agents conservateurs, des colorants, des concentrés de fruits.

7. Procédé selon la revendication 6, dans lequel ledit agent conservateur et ledit agent exhausteur de goût est l'acide citrique et que l'acide citrique est présent dans ledit produit alimentaire obtenu à l'étape C) dans une proportion allant de 0,01% à 10%, de préférence de 1 à 3% en poids dudit produit alimentaire obtenu à l'étape C).

8. Procédé selon l'une quelconque des revendications 1 à 7, dans lequel ledit second produit alimentaire congelé est une coque comestible.

9. Procédé selon la revendication 8, dans lequel ledit procédé comprend en outre une ou plusieurs étapes de préparation de la coque comestible.

10. Procédé selon l'une quelconque des revendications précédentes, dans lequel ledit produit alimentaire obtenu à l'étape E) est sélectionné dans le groupe composé des glaces alimentaires et des confiseries chocolatées.

11. Procédé selon la revendication 10, dans lequel ladite glace alimentaire est un sorbet.

12. Procédé selon l'une quelconque des revendications précédentes, **caractérisé en ce qu'**il comprend en outre l'étape d'insertion du bâtonnet dans le produit alimentaire obtenu à l'étape C).

13. Procédé selon l'une quelconque des revendications 1 à 12, dans lequel les produits alimentaires préparés sont destinés à être consommés congelés.

## Patentansprüche

1. Verfahren zur Inline-Herstellung von gefrorenen Nahrungsmitteln, enthaltend eine gelartige wässrige Phase, das die folgenden Schritte umfasst:
A)- Herstellen einer Zusammensetzung A, das die folgenden Unterschritte umfasst:
1)- Mischen der Bestandteile in einer wässrigen Phase, mit Ausnahme der gelbildenden Verbindung(en);
2)- gegebenenfalls Pasteurisieren des in 1) erhaltenen Gemischs;
3)- auf Temperatur Halten des in 1) oder 2) erhaltenen Gemischs auf einer Temperatur im Bereich zwischen -5 °C und +15 °C, bevorzugt auf +2 °C;
B)- Herstellen einer Zusammensetzung B, erhalten durch Mischen der gelbildenden Verbindung(en) mit einer wässrigen Lösung, enthaltend gegebenenfalls einen Teil der Bestandteile, bei einer Temperatur im Bereich zwischen +40 °C und +100 °C, bevorzugt zwischen +60 °C und +90 °C;
C)- Mischen der Zusammensetzungen A) und B) bei einer Temperatur im Bereich zwischen +5 °C und +20 °C, bevorzugt zwischen +10 °C und +15 °C, unter Verwendung eines dynamischen Mischers mit hoher Scherleistung, dessen Rotationsgeschwindigkeit im Bereich zwischen 1.500 und 3.000 U/Min. liegt;
D)- gegebenenfalls Inkontaktbringen des in Schritt C) erhaltenen Nahrungsmittels mit einem zweiten gefrorenen Nahrungsmittel; und
E)- Einfrieren des Nahrungsmittels.

2. Verfahren nach Anspruch 1, wobei die gelbildende Verbindung ausgewählt ist aus der Gruppe bestehend aus Gelatine, Pektin, Guar, Johannisbrotkernmehl, Alginaten.

3. Verfahren nach den Ansprüchen 1 und 2, wobei das in Schritt C) erhaltene Nahrungsmittel Gelatine in einem Anteil umfasst, der von 0,1 bis 10 Gew.-%, vorzugsweise von 3 bis 7 Gew.-% des in Schritt C) erhaltenen Nahrungsmittels reicht.

4. Verfahren nach den Ansprüchen 1 bis 3, wobei das in Schritt C) erhaltene Nahrungsmittel ferner Pektin in einem Anteil umfasst, der von 0,1 bis 10 Gew.-%, vorzugsweise von 3 bis 7 Gew.-% des in Schritt C) erhaltenen Nahrungsmittels reicht.

5. Verfahren nach einem der vorhergehenden Ansprüche, wobei das in Schritt C) erhaltene Nahrungsmittel einen Feuchtigkeitsgehalt im Bereich zwischen 30 und 70 Gew.-% bevorzugt zwischen 40 und 60 Gew.-% des in Schritt C) erhaltenen Nahrungsmittels aufweist.

6. Verfahren nach einem der vorhergehenden Ansprüche, wobei die Zubereitung A mindestens einen der Bestandteile umfasst, ausgewählt aus der Gruppe der Süßungsmittel, Aromastoffe, Geschmacksverstärker, Stabilisierungsmittel, Konservierungsmittel, Farbstoffe, Fruchtkonzentrate.

7. Verfahren nach Anspruch 6, wobei das Konservierungsmittel und der Geschmacksverstärker Citronensäure sind und die Citronensäure in dem in Schritt C) erhaltenen Nahrungsmittels in einem Anteil vorhanden ist, der von 0,01 Gew.-% bis 10 Gew.-%, bevorzugt von 1 Gew.-% bis 3 Gew.-% des in Schritt C) erhaltenen Nahrungsmittels reicht.

8. Verfahren nach einem der Ansprüche 1 bis 7, wobei das zweite gefrorene Nahrungsmittel eine essbare Schale ist.

9. Verfahren nach Anspruch 8, wobei das Verfahren ferner einen oder mehrere Schritte zur Herstellung der essbaren Schale umfasst.

10. Verfahren nach einem der vorhergehenden Ansprüche, wobei das in Schritt E) erhaltene Nahrungsmittel ausgewählt ist aus der Gruppe bestehend aus Speiseeis und Schokoladenkonfekt.

11. Verfahren nach Anspruch 10, wobei das Speiseeis ein Sorbet ist.

12. Verfahren nach einem der vorhergehenden Ansprüche, **dadurch gekennzeichnet, dass** es ferner den Schritt zur Einführung des Stiels in das in Schritt C) erhaltene Nahrungsmittel umfasst.

13. Verfahren nach einem der Ansprüche 1 bis 12, wobei die Nahrungsmittel dazu bestimmt sind, gefroren konsumiert zu werden.

## Claims

1. A method for online preparation of frozen food products comprising a gelled aqueous phase, which comprises the steps of:
A)-preparing a composition A, which comprises the substeps of:
1) mixing the ingredients, in an aqueous phase, with the exception of the gelling compound(s);
2) optionally, pasteurizing the mixture obtained in 1);
3) maintaining the temperature of the mixture obtained in 1) or 2) at a temperature of between -5°C and +15°C, preferably at +2°C;
B) preparing a composition B, obtained by mixing the gelling compound(s) with an aqueous solution optionally containing some of the ingredients at a temperature of between +40°C and +100°C, preferably between +60°C and +90°C;
C) mixing said compositions A) and B) at a temperature of between +5°C and +20°C, preferably between +10°C and +15°C using a high-shear dynamic mixer operating at a rotational speed of between 1500 and 3000 rpm;
D) optionally bringing said food product obtained in step C) into contact with a second iced food product; and
E) freezing said food product.

2. The method as claimed in claim 1, wherein said gelling compound is chosen from the group composed of gelatin, pectin, guar, carob and alginates.

3. The method as claimed in claims 1 and 2, wherein said food product obtained in step C) comprises gelatin in a proportion ranging from 0.1 to 10%, preferably from 3 to 7%, by weight of said food product obtained in step C).

4. The method as claimed in claims 1 to 3, wherein said food product obtained in step C) also comprises pectin in a proportion ranging from 0.1 to 10%, preferably from 3 to 7%, by weight of said food product obtained in step C).

5. The method as claimed in any one of the preceding claims, wherein said food product obtained in step C) has a moisture content of between 30 and 70%, preferably of between 40 and 60%, by weight of said food product obtained in step C).

6. The method as claimed in any one of the preceding claims, wherein said preparation A) comprises at least one of the ingredients chosen from the group of sweetening agents, flavoring agents, taste enhancers, stabilizers, preservatives, coloring agents and fruit concentrates.

7. The method as claimed in claim 6, wherein said preservative and said taste enhancer are citric acid, and in that the citric acid is present in said food product obtained in step C) in a proportion ranging from 0.01 % to 10%, preferably from 1 to 3%, by weight of said food product obtained in step C).

8. The method as claimed in any one of claims 1 to 7, wherein said second frozen food product is an edible shell.

9. The method as claimed in claim 8, wherein said method also comprises one or more steps for preparing the edible shell.

10. The method as claimed in any one of the preceding claims, wherein said food product obtained in step E) is selected from the group composed of ices and chocolate-flavored confectionery articles.

11. The method as claimed in claim 10, wherein said ice is a sorbet.

12. The method as claimed in any one of the preceding claims, wherein it also comprises the step of inserting the stick into the food product obtained in step C).

13. The method as claimed in any one of claims 1 to 12, wherein the prepared food products are intended to be consumed frozen.
